Europäisches Patentamt

European Patent Office

Office européen des brevets

(11) Publication number: **0 216 458**
**B1**

(12) **EUROPEAN PATENT SPECIFICATION**

(45) Date of publication of patent specification: **24.10.90**

(21) Application number: **86305521.6**

(22) Date of filing: **17.07.86**

(51) Int. Cl.⁵: **G 01 J 5/60**

(54) **Temperature detecting pyrometer.**

(30) Priority: **08.08.85 US 763909**

(43) Date of publication of application:
**01.04.87 Bulletin 87/14**

(45) Publication of the grant of the patent:
**24.10.90 Bulletin 90/43**

(84) Designated Contracting States:
**DE FR GB**

(56) References cited:
**EP-A-0 119 724**
**GB-A-2 045 425**
**US-A-3 759 102**
**US-A-4 222 663**

(73) Proprietor: **ROSEMOUNT INC.**
**12001 West 78th Street**
**Eden Prairie, MN 55344 (US)**

(72) Inventor: **Jensen, Stephen C.**
**5904 Ashcroft Avenue South**
**Edina Minnesota 554024 (US)**

(74) Representative: **Cross, Rupert Edward Blount et al**
**BOULT, WADE & TENNANT 27 Furnival Street London EC4A 1PQ (GB)**

Courier Press, Leamington Spa, England.

## Description

The present invention relates to a temperature detecting pyrometer.

Pyrometers are well known as is the use of various optics for receiving radiation being emitted from bodies.

US—A—4 222 663 discloses an optical pyrometer and technique for temperature measurement of a body, which includes means for correcting errors due to reflected energy from the body being monitored. A pair of detectors see the same body, but at least one detector has its input filtered, so that the wave length interval of one detector is contained within that of the other. Conventional detectors are utilized for generating output voltages that are analyzed in a high speed computer. The computer produces an output that compensates for the presence of reflected energy by estimating the magnitude of the reflected energy component through the calculations.

US—A—4 222 663 indicates that detectors and filters are conventional, and also mentions that fiber optic bundles are utilized.

A two-color pyrometer is disclosed in US—A—3 715 922, which utilizes two photo devices responding to different wavelengths, and means to provide a measure of the ratio of received radiation intensities at the two different wavelengths.

Another two-color pyrometer is disclosed in US—A—3 992 943, which pyrometer is used for monitoring the radiation intensities of two different wavelengths which are used for obtaining an indication of temperature.

FR—A—2 365 108 discloses an optical system for measuring the temperature of the fins of a turbo-reactor, and includes filters for passing radiation at two different wavelengths, and detectors that separately detect the radiation levels and provide output signals that are amplified and then passed to a divider circuit that in turn produces analog signals that are representative of the ratio of the amplitudes of the signals from the detectors. The analog signal from the output divider circuit is used in a central processing unit to provide the appropriate measurement of the temperature of the fins of the turbine.

US—A—4 326 798 discloses a pyrometer system with a measurement of temperature from a source of heat which might be contaminated by radiation from a transient spurious source of heat at a higher temperature, the system using filters to divide radiation detected directly from a turbine blade into two channels which are separately detected and their outputs divided and fed to a threshold detector to provide a "flag" output signal if the ratio between the outputs of the two detectors exceeds a predetermined value to indicate an erroneous temperature reading due to the presence on hot carbon particles. Additionally, this specification discloses the use of output amplifiers for each of the detectors, and the use of a scaling factor circuit on the output of one of the amplifiers, which is then fed to a subtraction circuit.

In GB—A—2 045 425 there is disclosed a temperature detecting pyrometer for use with a member emitting radiation as a function of its temperature and also reflecting radiation, comprising means to receive both reflected and emitted radiation from the member; means to divide the radiation from the member into two channels, at least one channel having filter means, each channel detecting a portion of the reflected radiation; first and second detector means providing first and second electrical signals which are a function of the total radiation level from each of the channels after passing through the filter means; and means to compare the first and second electrical signals and to provide an output signal representing the difference between the first and second signals after weighting.

According to this invention such a pyrometer is characterised by means to add a weighting constant to one of the signals relative to the other signal prior to supply of the signals to the comparing means, which constant represents the ratio of the portions of the first and second electrical signals representing reflected radiation.

The present invention provides a temperature detecting pyrometer that effectively eliminates the effect of spurious reflected radiation.

The sensing is done in a simple manner by dividing the detected radiation into two channels, and filtering at least one of the channels so that the detector used for each channel responds to radiation of different wavelength ranges, the output of one of the detectors being weighted relative to the other by a factor based on the ratio between the portions of the output signals from the two detectors that is attributable to reflected radiation. That is, each of the detectors provides a total current output, and a portion of the total current from each detector is attributable to the reflected radiation. The ratio between the outputs attributable to this reflected radiation can be determined and used as the weighting or scaling constant.

The difference between the factored output from one of the detectors, and the output from the other detector can be provided to a difference amplifier or substracting circuit, to provide a signal that is directly related to the temperature measured. The signal can be used for driving a recorder, sounding an alarm if above a predetermined level or provided to a microprocessor for calculating the actual temperature.

The pyrometer of the invention is particularly suited to use in measuring temperatures in turbines. The actual turbine blade temperature is the most important temperature in a turbine. High temperature operation is desired to obtain maximum power or maximum efficiency from a turbine, but excessive temperatures can warp parts and cause irreparable damage.

At present, blade temperatures are determined inferentially by measuring inlet and exhaust gas temperatures. The actual blade temperatures are not known, so to avoid exceeding the maximum rated temperature, a safety factor has to be used with the temperature data presently available which reduces the operating blade temperatures below optimum. The pyrometer of the present invention permits controlling the turbine operation at or near optimum temperature without accidentally exceeding the design parameters of the turbine parts.

This invention will now be described by way of example with reference to the drawings, in which:—

Figure 1 is a schematic representation of a pyrometer in accordance with the invention;

Figure 2 is a block circuit diagram of the pyrometer of Figure 1; and

Figure 3 is a graph illustrating the relationship of normalized output signals to temperature measured for the pyrometer of Figures 1 and 2.

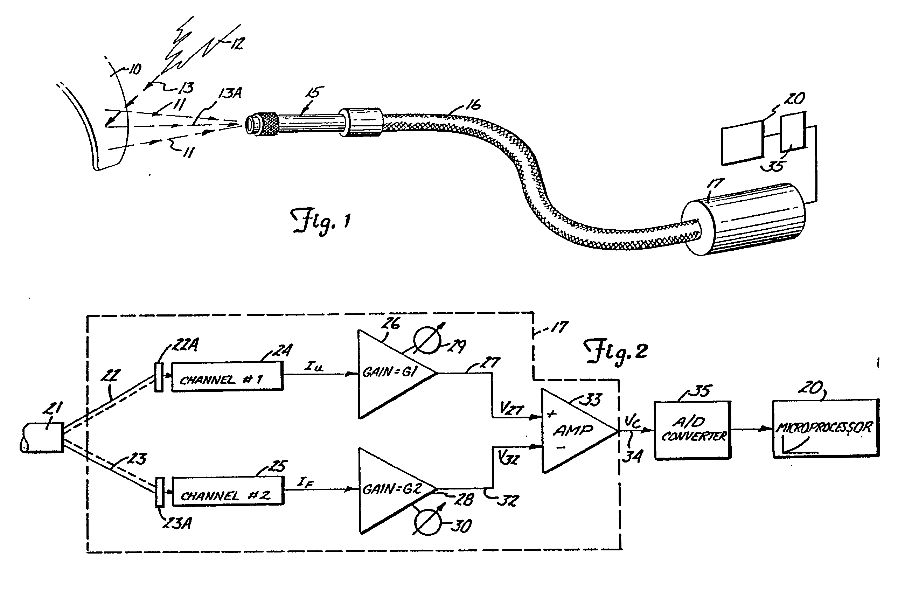

In Figure 1, a turbine blade represented generally 10 is to have its temperature detected utilizing pyrometer techniques. The turbine blade emits radiation indicated by the arrows 11 that represent the true temperature of the blade. Flame or hot carbon particles illustrated generally at 12 emit radiation indicated by the arrows 13 which then strike the blade 10 and are reflected along a path indicated at 13A, along with arrows 11, toward a pyrometer lens-head assembly of conventional design indicated generally at 15. A fiber optic cable 16 is used for transmitting the radiation received by the lens-head assembly to a preamplifier package 17 which is connected to suitable processing circuitry.

The preamplifier package output can be coupled to a direct indicating digital output, a recorder, or the like. A table or calibration curve can be used for determining the actual temperature of the blade after the signals have been processed in the preferred circuitry.

Figure 2 illustrates typical circuitry. The end of the optical fiber is illustrated in Figure 2 at 21, and it emits radiation, which is divided generally into first and second channels or paths 22 and 23. At least one path is filtered, and as shown, two different filters 22A and 23A can be used. The output from first filter 22A is considered an unfiltered channel in the subsequent discussion.

After filtering, the radiation in each channel is in a different frequency range (and thus different wavelength range) from the other channel. In the example disclosed herein, the radiation transmitted by the filter 22A will lie within a broad wavelength range, and the radiation transmitted by filter 23A will lie within a selected segment of this range. If desired, the filter 22A can be selected to transmit radiation having wavelengths in an entirely different range from the radiation transmitted by filter 23A.

The radiation level in the first channel 22 from the filter 22A is sensed in a radiation detector 24 which comprises a standard photodiode detector providing an output current ($I_u$). A second radiation detector 25 is used for sensing the radiation in the second path or channel 23 after it has passed through filter 23A, and for providing a current ($I_f$) which represents the current in the filtered pyrometer channel. The radiation detectors are standard detectors commonly used in pyrometers.

The output current ($I_u$) from detector 24 is provided to a first amplifier 26 which converts the detector current to a voltage signal and provides a voltage output along a line 27 ($V_{27}$).

A second amplifier 28 is connected to receive the current output ($I_f$) from detector 25 to convert it to a voltage output from amplifier 28 on line 32 ($V_{32}$).

Amplifier 26 has a first gain ($G_1$) that may be adjusted with a gain control 29. The output voltage ($V_{27}$) is proportional to the input current ($I_u$). The second amplifier 28 has a second gain ($G_2$) adjusted by a gain control 30. Second gain $G_2$ over first gain $G_1$ is equal to a scaling factor K; that is $G_2/G_1 = K$. The scaling factor K is used in subsequent equations to null out the portion of the signal that is a result of the reflected radiation of flame and hot carbon particles.

The output of amplifier 28 is connected to one input of an amplifier 33 by line 32. The output of amplifier 26 is connected to the second input of amplifier 33 by line 27.

Amplifier 33 is a difference or subtracting amplifier which provides an output on line 34 representing the difference in the signals on lines 27 and 32. Because the voltages on lines 27 and 32 ($V_{27}$ and $V_{32}$) are proportional to the currents from detectors 24 and 25, the voltage at the output of amplifier 33 on line 34, which is called $V_c$, is proportional to the difference in currents from detectors 24 and 25, that is, $V_c \propto (I_u - KI_f)$. The voltage $V_c$ as will be shown represents blade temperature directly and may be used for any desired function. As shown, the output of amplifier 33 which is a function of blade temperature with the effect of reflected radiation at least substantially reduced, is connected to a conventional analog to digital converter 35, and the digital output signal from converter 35 is then fed to microprocessor 20. Microprocessor 20 is then programmed for calculating the blade temperature. The solution for temperature (T) is a nonlinear equation, and the correction curve or equation is programmed into the microprocessor 20. A table of values of $V_c$ corresponding to temperatures also may be provided, and placed in the memory of the microprocessor, or the table can be used manually if desired. The correction curve or table may be established experimentally as well. That is, actual controlled temperatures may be sensed and the voltage output noted for calibration.

Using the weighting factor (K) to scale the output from one of the amplifiers with respect to the other can be shown to eliminate the reflected radiation effect or value from the output by the following analysis:

$I_f$ = total current detected from detector 25 (filtered)

$I_u$ = total current detected from detector 24 (unfiltered)

$i_f$ = portion of $I_f$ which is due to reflected radiation

$i_u$ = portion of $I_u$ which is due to reflected radiation

$i_{fs}(T)$ = portion of $I_f$ which depends only on blade temperature (T)

$i_{us}(T)$ = portion of $I_u$ which depends only on blade temperature (T)

It can be assumed that the flame is to a reliable approximation at a constant temperature so that the ratio of $i_u$ to $i_f$ is a constant:

$$K = i_u/i_f \quad \text{or} \quad i_u = Ki_f \qquad \text{Eq. (1)}$$

The following relationships are established:

$$I_u = i_u + i_{us}(T) \qquad \text{Eq. (2)}$$

$$I_f = i_f + i_{fs}(T) \qquad \text{Eq. (3)}$$

Substituting Eq. (1) into Eq. (2), and taking the difference of the result with the product of K times Eq. (3), the equation reduces to:

$$I_u - KI_f = i_{us}(T) - Ki_{fs}(T) \qquad \text{Eq. (4)}$$

Thus, by appropriately weighting one channel output with respect to the other (K) and then taking the difference in amplifier 33, the component of the signal attributable to reflected radiation (flame) can be eliminated or substantially reduced. The output on line 34 is proportional to $I_u - KI_f$ and is thus a function of blade temperature "T" only.

In order to obtain "K", a calibration procedure can be followed which provides K easily. It is known that the temperatures of hot carbon particles and flame may range between 3,500°F and 4,500°F (°F can be converted into °C according to the relation $t_c = 0.55 \cdot (t_F - 32)$). The optimum blade temperature is considerably below those temperatures, typically in the range of 2,500°F. A temperature representing an average temperature of the flame and hot carbon particles present in the turbine under consideration is selected. For example, a temperature of 4,200° is typical. Thus in this example, a reference source equivalent to flame at 4,200°F is provided and is sensed by the pyrometer lens-head assembly 15. Gain controls 29 and 30 for setting the gains $G_1$ and $G_2$ of amplifiers 26 and 28 are adjusted so that when the pyrometer head is viewing the 4,200°F source, the output from the difference amplifier 33 is nulled, or brought to zero. Under the equation, nulling will result when $G_2/G_1 = K$, or in other words the ratio of the gain factors will be the same as the ratio between the outputs attributable to reflected radiation in each of the channels, when this reference temperature is used. This is the same K as discussed above.

The gain of the difference amplifier 33 can then be adjusted to give a convenient voltage range, for example, zero to ten volts DC for blade temperatures of 1,500 to 2,500°F.

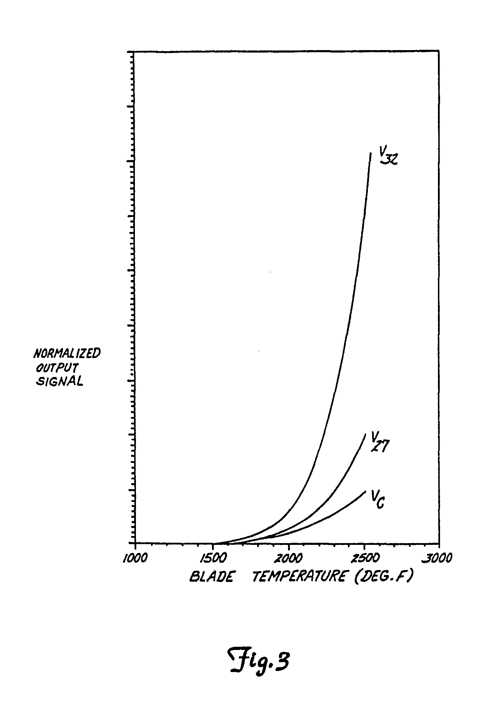

Figure 3 illustrates normalized curves modeling the output signals from amplifiers 26, 28 and 33 relative to temperature. The output curves for the outputs of amplifiers 26 and 28 are labeled $V_{27}$ and $V_{32}$, respectively, and the output from amplifier 33 is labeled $V_c$. In Figure 3, the outputs are normalized at 1,200°F and the output curve $V_c$ is the modeled output set for a 4,200°F flame.

It can be seen that the signal $V_c$ is nonlinear and thus microprocessor 20 is programmed to calculate the blade temperature from $V_c$ with a nonlinear program function.

Equation (4) above, indicates that the output $V_c$ is a function of blade temperature only and the effect of reflected radiation has been substantially reduced by use of the scaling factor K.

It should be noted that the scaling factor K can be provided by a separate circuit connected between the output of amplifier 28 and the associated input of amplifier 33, if desired. It is further noted that the output from amplifier 33 ($V_c$) is independent of radiation due to sources at the calibration temperature where K was selected. For other flame and hot carbon particle temperatures, the output ($V_c$) is sensitive to the presence of such flame and hot carbon particles. The present invention substantially reduces such effects.

The elimination or substantial reduction from the output of the reflected radiation component of flame or hot carbon particle effect, as shown, provides reliable, easily used signals for directly obtaining a signal representative of blade temperature.

**Claims**

1. A temperature detecting pyrometer for use with a member emitting radiation as a function of its temperature and also reflecting radiation, comprising means (15) to receive both reflected and emitted radiation from the member; means (17) to divide the radiation from the member into two channels (22, 23), at least one channel having filter means (22A, 23A), each channel (22, 23) detecting a portion of the reflected radiation; first and second detector means (24, 25) providing first and second electrical signals (Iu, If) which are a function of the total radiation level from each of the channels (22, 23) after passing through the filter means (22A; 23); and means (33) to compare the first and second electrical signals and to provide an output signal (34) representing the difference between the first and second signals after weighting, characterised by means (26, 28) to add a weighting constant to one of the signals relative to the other signal prior to supply of the signals to the comparing means (33), which constant represents the ratio of the portions of the first and second electrical signals representing reflected radiation.

2. A pyrometer as claimed in Claim 1, characterised in that said one channel transmits the entire amount of radiation emitted by the member.

3. A pyrometer as claimed in Claim 1 or Claim 2, characterised in that the means to compare (33) comprises means to subtract a portion of the first signal from the second signal to provide the output signal.

## Patentansprüche

1. Pyrometer zur Temperaturerfassung für die Verwendung mit einem Strahlung als eine Funktion seiner Temperatur aussendenden und die Strahlung auch reflektierenden Teil, mit Mitteln (15) für den Empfang sowohl der reflektierten als auch der von dem Teil ausgesendeten Strahlung; mit Mitteln (17), um die Strahlung von dem Teil in zwei Kanäle (22, 23) aufzuteilen, wobei mindestens ein Kanal eine Filtervorrichtung (22A, 23A) aufweist und jeder Kanal (22, 23) einen Anteil der reflektierten Strahlung erfaßt; mit einer ersten und einer zweiten Detektorvorrichtung (24, 25), die ein erstes und ein zweites elektrisches Signal (Iu, If) erzeugen, die eine Funktion des gesamten Strahlungspegels aus jedem der Kanäle (22, 23) nach Durchtreten der Filtervorrichtungen (22A; 23) sind; und mit einer Vergleichereinrichtung (33), um die ersten und zweiten elektrischen Signale zu vergleichen und ein Ausgangssignal (34) zu erzeugen, das die Differenz zwischen den ersten und den zweiten Signalen nach deren Bewertung bzw. Gewichtung wiedergibt, gekennzeichnet durch Mittel (26, 28) zum Addieren einer Bewertungskonstante zu einem der Signale relativ zu dem anderen Signal vor dem Zuführen der Signale zu der Vergleichereinrichtung (33), welche Konstante das Verhältnis der Anteile der ersten elektrischen Signale und der zweiten elektrischen Signale wiedergibt, die die reflektierte Strahlung darstellen.

2. Pyrometer nach Anspruch 1, dadurch gekennzeichnet, daß ein Kanal die gesamte Strahlungsmenge, die durch das Teil ausgesendet wird, überträgt.

3. Pyrometer nach Anspruch 1 oder 2, dadurch gekennzeichnet, daß die Vergleichereinrichtung (33) Mittel aufweist, um einen Anteil des ersten Signals von dem zweiten Signal zu subtrahieren, um das Ausgangssignal zu erzeugen.

## Revendications

1. Pyromètre détecteur de température pour utilisation avec un élément émetteur de radiations en fonction de sa température et réfléchissant également des radiations, comprenant des moyens (15) pour recevoir à la fois les radiations émises et réfléchies par ledit élément; des moyens (17) pour diviser les radiations émises par ledit élément en deux canaux (22, 23), au moins l'un des canaux ou premier canal ayant des moyens de filtrage (22A, 23A), chaque canal détectant une partie des radiations réfléchies; des premier et second détecteurs (24, 25) délivrant des premier et second signaux électriques (Iu, If) qui sont fonction du niveau total des radiations de chaque canal (22, 23) une fois celles-ci passées à travers les moyens de filtrage (22A; 23A); et des moyens de comparaison (33) pour comparer les premier et second signaux électriques et pour fourner un signal de sortie (34) représentatif de la différence entre lesdits premier et second signaux après pondération, caractérisé par des moyens (26, 28) pour ajouter une constante de pondération à l'un des signaux par rapport à l'autre avant d'envoyer ces signaux aux moyens de comparaison (33), constante qui représente le rapport des parties des premier et second signaux électriques représentant les radiations réfléchies.

2. Pyromètre selon la revendication 1, caractérisé en ce que ledit premier canal transmet la totalité des radiations émises par l'élément.

3. Pyromètre selon la revendication 1 ou 2, caractérisé en ce que les moyens de comparaison (33) comprennent des moyens pour soustraire une partie du premier signal au second signal pour fournir le signal de sortie.

Fig. 1

Fig. 2

MICROPROCESSOR 20

A/D CONVERTER 35

AMP 33

GAIN = G1 26

GAIN = G2 28

CHANNEL #1 24A

CHANNEL #2 25

NORMALIZED
OUTPUT
SIGNAL

$V_{32}$

$V_{27}$

$V_C$

1000    1500    2000    2500    3000
BLADE   TEMPERATURE (DEG.F)

Fig.3